# EUROPEAN PATENT APPLICATION

(11) **EP 4 507 375 A1**
(43) Date of publication of application: **12.02.2025**
(21) Application number: 22934369.4
(22) Date of filing: 02.04.2022
(51) Int. Cl.: H04W 36/00

(54) **METHOD AND APPARATUS FOR CONFIGURING INFORMATION, AND COMMUNICATION SYSTEM**

(71) Applicant: FUJITSU LIMITED, Kawasaki-shi, Kanagawa 211-8588 (JP)
(72) Inventor: YI, Su, Beijing 100022 (CN); LU, Yang, Beijing 100022 (CN); JIA, Meiyi, Beijing 100022 (CN); LI, Guorong, Beijing 100022 (CN)
(74) Representative: Haseltine Lake Kempner LLP
(86) International application number: PCT/CN2022/085090
(87) International publication number: WO 2023/184542

(57) **Abstract**

Embodiments of the present disclosure provide a method for configuring information and an apparatus therefor, and a communication system, the apparatus for configuring information is applied to an IAB-node, the apparatus including: a first receiving unit configured to receive an RRC reconfiguration message, the RRC reconfiguration message indicates information on a topology to which a default uplink BAP routing ID configured for the IAB-node belongs.

## Description

### TECHNICAL FIELD

Embodiments of the present disclosure relate to the field of communication technologies.

### BACKGROUND

Integrated access and backhaul (IAB), also called access and backhaul integration, implements a radio relay function in a next generation radio access network (NG-RAN). An integrated access and backhaul node (IAB-node) supports access and backhaul via New Radio (NR). Terminating point of NR backhaul in a network side is called an IAB-donor, which represents a network device (for example, a gNB) having a function of supporting IAB.

An IAB-node may be connected to an IAB-donor via one or more hops. These multi-hop connections form a Directed Acyclic Graph (DAG) topological structure which takes the IAB-donor as a root node. The IAB-donor is responsible for performing centralized resource management, topology management and routing management in an IAB network topology.

The IAB-node supports a function of a gNB-DU (distributed unit), the IAB-node DU is also called an IAB-DU, and the IAB-DU is an endpoint of a radio access (NR) interface to a terminal equipment (UE) and a next-hop IAB-node and is also an endpoint of an F1 protocol to a gNB-CU (central unit) on the IAB-donor. The IAB-DU may serve for a common UE and a child IAB-node. The IAB-DU implements a function of a network side device, is connected to a downstream child IAB-node, provides NR air interface access for a UE and the downstream child IAB-node, and establishes F1 connection to the IAB donor-CU.

In addition to the function of the gNB-DU, the IAB-node also supports some functions of an UE, called an IAB-MT (Mobile Termination), the IAB-MT includes, for example, functions of a physical layer, a layer 2, RRC and NAS to be connected to a gNB-DU of another IAB-node or IAB-donor, and to be connected to a gNB-CU on the IAB-donor and to a core network. The IAB-MT supports such functions as a UE physical layer, access stratum (AS), a radio resource control (RRC) layer and a non-access stratum (NAS), and may be connected to a parent IAB-node.

The IAB-donor is a terminating node on a network side, and the IAB-donor provides network access for an IAB-MT or a UE via a backhaul or access link. The IAB-donor is further classified as an IAB-donor-CU (central unit) and an IAB-donor-DU. The IAB-DU and the IAB-donor-CU are connected via an F1 interface. In an independent networking scenario, the gNB is connected to the IAB-donor-CU via an Xn interface.

To support multi-hop routing forwarding of a data packet, a Backhaul Adaptation Protocol (BAP) sublayer is introduced to the IAB. The BAP sublayer is located above a Radio Link Control (RLC) sublayer and below an IP layer, and supports such functions as packet destination node and path selection, packet routing forwarding, bearer mapping, flow control feedback, and backhaul link failure notification.

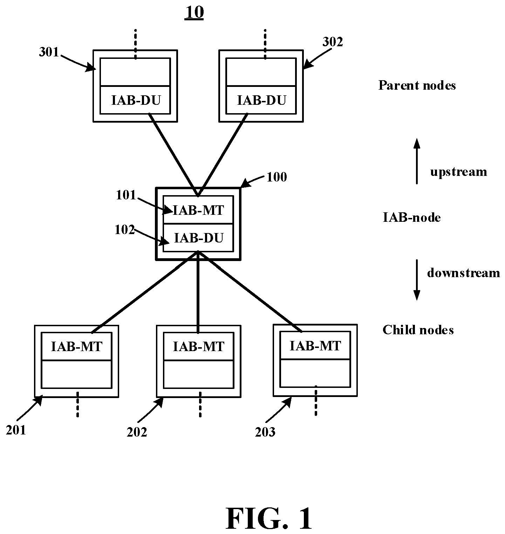

FIG. 1 is a schematic diagram of an IAB parent-child node relationship. As shown in FIG. 1, in the IAB parent-child node relationship structure 10, the IAB-node 100 includes an IAB-MT functional unit 101 and an IAB-DU functional unit 102, neighboring nodes on an interface of the IAB-DU functional unit 102 are called child nodes, such as child nodes 201, 202 and 203 shown in FIG. 1, the IAB-DU functional unit 102 may communicate with the child nodes 201, 202 and 203 via an air interface (Uu); neighboring nodes on an interface of the IAB-MT functional unit 101 are called parent nodes, such as parent nodes 301 and 302 shown in FIG. 1, the IAB-MT functional unit 101 may communicate with the parent nodes 301 and 302 via the air interface (Uu).

As shown in FIG. 1, the direction from the IAB-node 100 to the child nodes 201, 202, and 203 is called a downstream direction, and the direction from the IAB-node 100 to the parent nodes 301 and 302 is called an upstream direction. IAB-donor (not shown) performs centralized resource, topology and routing management for the IAB topological structure 10.

It should be noted that the above introduction to the technical background is just to facilitate a clear and complete description of the technical solutions of the present disclosure, and is elaborated to facilitate the understanding of persons skilled in the art. It cannot be considered that said technical solutions are known by persons skilled in the art just because these solutions are elaborated in the Background of the present disclosure.

### SUMMARY OF INVENTION

In a multi-hop scenario, in order to realize relay forwarding of a packet, an IAB-node needs to determine a destination node to which the packet reaches, and then determines a next-hop node corresponding to the destination node according to a routing table and transmits the next-hop node. A donor-CU configures the IAB-node with mapping from each uplink F1-U tunnel initiated by the IAB-node, a non-UE associated F1AP message, a UE-associated F1AP message and non-F1 traffic to a BAP routing identity via F1AP (F1 application protocol) signaling.

The IAB-node determines BAP routing identities corresponding to different types of uplink IP packets initiated from the IAB-node according to routing identity mapping information, and encapsulates BAP subheaders containing BAP routing identity information for these uplink IP packets. The donor-CU configures the donor-DU with mapping from different types of downlink packets to a BAP routing identity via the F1AP signaling. The donor-DU determines BAP routing identities corresponding to the received downlink IP packets according to the routing identity mapping information, and encapsulates downlink BAP subheaders containing BAP routing identities for these downlink IP packets.

The BAP routing identity includes a destination BAP address and a path identity from the IAB-node to the donor-DU. The BAP address is also called a DESTINATION in a BAP header. Each IAB-node and donor-DU are configured with a BAP address.

At the time of IAB-node initiation (integration), RRC may configure a default BH RLC channel and a default BAP routing identity for non-F1-U traffic. These configurations may be updated in a topology adaptation scenario.

The IAB-node may have redundant paths to different IAB-donor-CUs. For an IAB-node that works in a Stand Alone (SA) mode, the IAB-MT may be allowed to have backhaul links to two parent nodes simultaneously via NR-DC, so as to achieve route redundancy for backhaul. Two parent nodes may be connected to different IAB-donor-CUs, these IAB-donor-CUs may control establishment and release of redundant routes passing through the two parent nodes. The gNB-DU function of the parent nodes and the corresponding IAB-donor-CUs achieve roles of a master node (MN) and/or a secondary node (SN) of the IAB-MT. Framework (such as MCG/SCG related procedures) of the NR-DC is used to configure a dual radio connection from the IAB-node and the parent node.

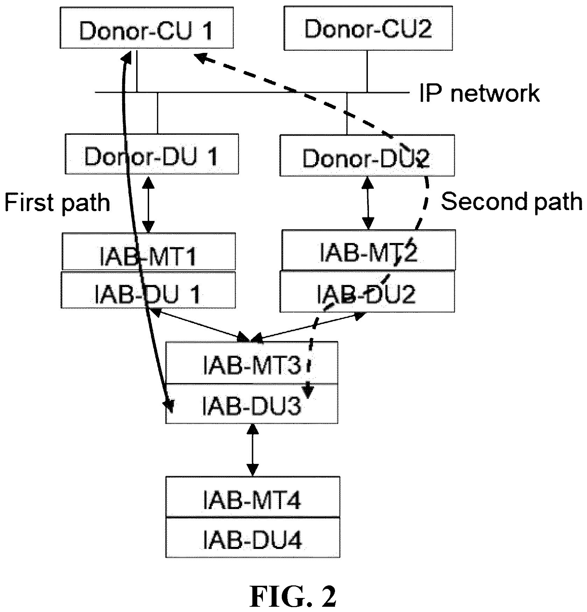

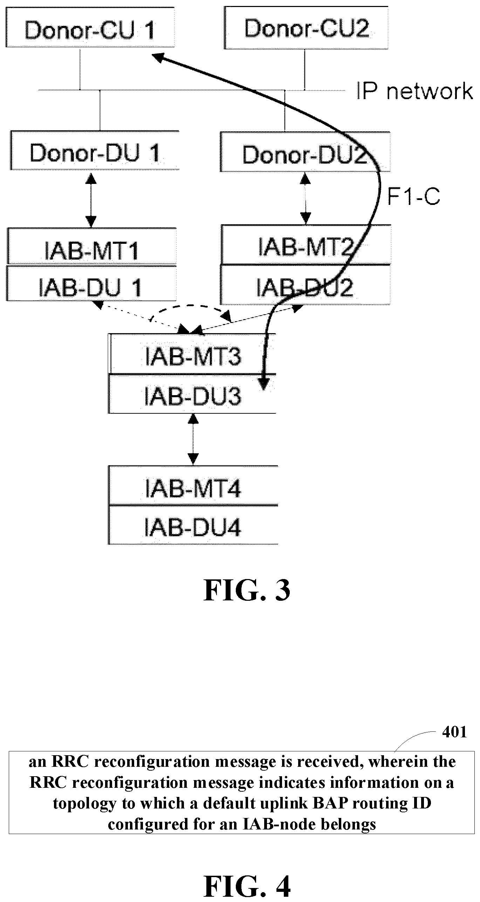

FIG. 2 is a schematic diagram of a network structure of inter-donor topology redundancy (or inter-CU topology redundancy). FIG. 3 is a schematic diagram of inter-donor partial migration.

As shown in FIG. 2, node 3 is called a boundary IAB-node. The boundary IAB-node refers to that an RRC interface and the F1 interface of the IAB-node are terminated to different IAB-donor-CUs. The boundary IAB-node is applicable to partial migration, inter-donor topology redundancy, and inter-donor radio link failure (RLF) recovery. As shown in FIG. 2, a DU of node 3 is terminated to CU1, and an MT of node 3 has an interface to both CU1 and CU2, thus meeting the definition of the boundary IAB-node. Descendant IAB-node is a node that is accessed to a network via the boundary IAB-node, and each node is single-connected to its own parent node, for example, IAB-node 4 is a descendant node. F1-terminating donor node refers to a donor-CU that terminates F1 interfaces of the boundary IAB-node and the descendant node. For example, donor-CU1 is an F1 terminating node, that is, F1 interfaces of IAB-DU3 and IAB-DU4 in FIG. 2 are terminated to donor-CU1. Non-F1-terminating donor node refers to a CU that does not terminate F1 interfaces of the boundary IAB-node and the descendant node and has a donor function, such as donor-CU2 in FIG. 2. In the topology redundancy scenario shown in FIG. 2, the boundary node (i.e., node 3) is a dual-connected node. In the inter-donor topology redundancy scenario, the boundary IAB-node (i.e., IAB-node 3) and the descendant node may communicate with CU1 via a first path and a second path, respectively.

In FIG. 3, the IAB-MT (i.e., IAB-MT3) of the boundary IAB-node may be migrated to a parent node under a different IAB-donor-CU (for example, migrated to a parent node under Donor-CU2). In this situation, the co-located IAB-DU (i.e., IAB-DU3) and IAB-DU (e.g., IAB-DU4) of the descendant node maintain F1 connections to an original IAB-donor-CU (e.g., Donor-CU1). This migration is called inter-donor partial migration. After the inter-donor partial migration, F1 traffic of the IAB-DU of the boundary IAB-node and of the descendant node are routed via a BAP layer of an IAB topology to which the IAB-MT of the boundary IAB-node is migrated. The SA mode is capable of supporting the inter-donor partial migration.

When an IAB-node in the SA mode declares RLF of a backhaul link, it may perform RLF recovery at parent nodes under different IAB-donor-CUs. Same as the inter-donor partial migration, co-located IAB-DU (of the IAB-MT) and IAB-DU of the descendant node maintain F1 connection to an IAB-donor-CU.

IAB-node 3 is a boundary IAB-node, and IAB-MT3 changes from being single-connected to a parent node (IAB-node 1) to being single-connected to another parent node (IAB-node 2). Both IAB-DU3 and its child node (IAB-node 4) still have the F1 connection with donor-CU1, but a path through which the F1 connection passes finally reaches donor-CU1 via the IAB-node 2. In the inter-donor partial migration scenario shown in FIG. 3, the boundary node (node 3) is a migrating node. The inter-donor partial migration scenario also applies to partial RLF recovery.

The inventor of the present disclosure finds that the boundary IAB-node belongs to two IAB topologies. The related art does not indicate which topology is used when configuring a default uplink BAP routing identity and/or a default uplink BH RLC channel for the boundary IAB-node. For example: when configuring the default uplink BH RLC channel, a situation in which the SN serves as an F1-terminating donor is not taken into account. In addition, when configuring an IP address for the boundary IAB-node or its descendant node, a situation in which the BAP address of a corresponding donor-DU is a pseudo address is not taken into account either.

Embodiments of the present disclosure provide a method, an apparatus for configuring information, and a communication system, an RRC reconfiguration message indicates information on a topology to which a default uplink BH RLC channel and/or a default uplink BAP routing ID configured for an IAB-node belongs. Thereby, which topology to which a default uplink BAP routing ID and/or a default uplink BH RLC channel configured for an IAB-node belongs can be indicated.

According to one aspect of the embodiments of the present disclosure, an apparatus for configuring information is provided, applicable to an IAB-node, the apparatus including:
a first receiving unit configured to receive an RRC reconfiguration message, wherein the RRC reconfiguration message indicates information on a topology to which a default uplink BAP routing ID configured for the IAB-node belongs.

According to another aspect of the embodiments of the present disclosure, an apparatus for configuring information is provided, applicable to an IAB-node, the apparatus including:
a second receiving unit configured to receive an RRC reconfiguration message, wherein the RRC reconfiguration message indicates information on a topology to which a default uplink BH RLC channel configured for the IAB-node belongs.

According to a further aspect of the embodiments of the present disclosure, an apparatus for configuring information is provided, applicable to an IAB-node, the apparatus including:
a third receiving unit configured to receive an RRC reconfiguration message, wherein the RRC reconfiguration message configures a first donor-DU BAP address for the IAB-node, the first donor-DU BAP address referring to a donor distributed unit (DU2) under a second topology.

An advantageous effect of the embodiments of the present disclosure lies in: which topology to which a default uplink BAP routing ID and/or a default uplink BH RLC channel configured for an IAB-node belongs can be indicated.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of an IAB parent-child node relationship;
FIG. 2 is a schematic diagram of a network structure of inter-donor topology redundancy;
FIG. 3 is a schematic diagram of inter-donor partial migration;
FIG. 4 is a schematic diagram of a method for configuring information in the embodiments of a first aspect;
FIG. 5 is a schematic diagram of a method for configuring information in the embodiments of a second aspect;
FIG. 6 is a schematic diagram of a method for configuring information in the embodiments of a third aspect;
FIG. 7 is a schematic diagram of a method for configuring information in the embodiments of a fourth aspect;
FIG. 8 is a schematic diagram of a method for configuring information in the embodiments of a fifth aspect;
FIG. 9 is a schematic diagram of a method for configuring information in the embodiments of a sixth aspect;
FIG. 10 is a schematic diagram of an apparatus for configuring information in the embodiments of a seventh aspect;
FIG. 11 is a schematic diagram of an apparatus for configuring information in the embodiments of an eighth aspect;
FIG. 12 is a schematic diagram of an apparatus for configuring information in the embodiments of a ninth aspect;
FIG. 13 is a schematic diagram of an apparatus for configuring information in the embodiments of a tenth aspect;
FIG. 14 is a schematic diagram of an apparatus for configuring information in the embodiments of an eleventh aspect;
FIG. 15 is a schematic diagram of a method for configuring information in the embodiments of a twelfth aspect;
FIG. 16 is a schematic diagram of composition of an electronic device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as New Radio (NR), Long Term Evolution (LTE), LTE-Advanced (LTE-A), Wideband Code Division Multiple Access (WCDMA), High-Speed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: an Integrated Access and Backhaul node (IAB-node), a relay, a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.). And the term "BS" may include their some or all functions, each BS may provide communication coverage to a specific geographic region. The term "a cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT), a mobile termination (MT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above.

In a prior art (e.g. TS38.331), a field description on configuring a default BAP routing ID and a BH RLC channel in an RRC reconfiguration message is shown in Table 1.

**Table 1**

| |
|---|
| ***defaultUL-BAP-RoutingID*** |
| This field is used for IAB-node to configure the default uplink Routing ID, which is used by IAB-node during IAB-node bootstrapping, migration, IAB-MT RRC resume and IAB-MT RRC re-establishment for *F1-C* and *non-F1* traffic. The *defaultUL-BAP-RoutingID* can be (re-)configured when IAB-node IP address for *F1-C* related traffic changes. This field is mandatory only for IAB-node bootstrapping. |
| ***defaultUL-BH-RLC-Channel*** |
| This field is used for IAB-nodes to configure the default uplink BH RLC channel, which is used by IAB-node during IAB-node bootstrapping, migration, IAB-MT RRC resume and IAB-MT RRC re-establishment *for F1-C and non-F1 traffic.* The *defaultUL-BH-RLC-Channel* can be (re-)configured when IAB-node IP address for *F1-C* related traffic changes, and the new IP address is anchored at a different IAB-donor-DU. This field is mandatory for IAB-node bootstrapping. If the IAB-MT is operating in EN-DC, the default uplink BH RLC channel is referring to an RLC channel on the SCG; Otherwise, it is referring to an RLC channel on the MCG. |

In a related art (such as TS38.331), the field content of IAB-IP-AddressConfiguration and a field description of iab-donor-DU-BAP-Address in an RRC reconfiguration message are shown in Table 2.

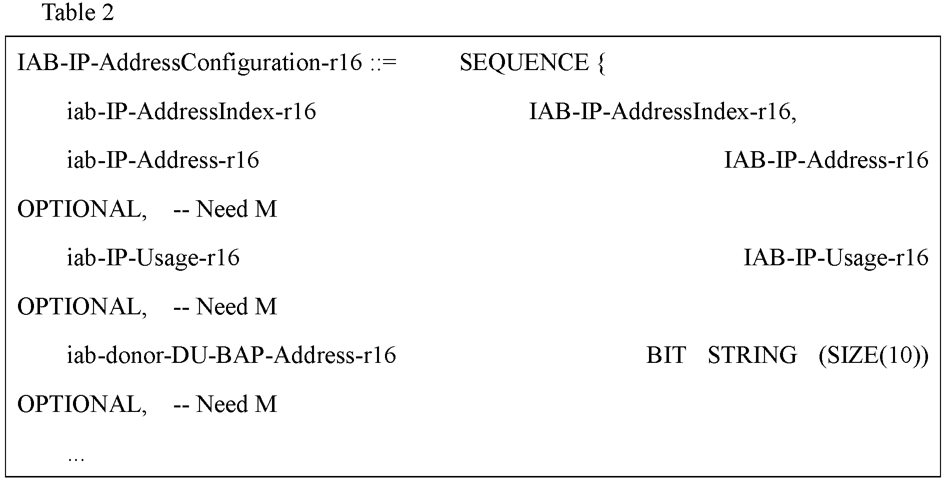

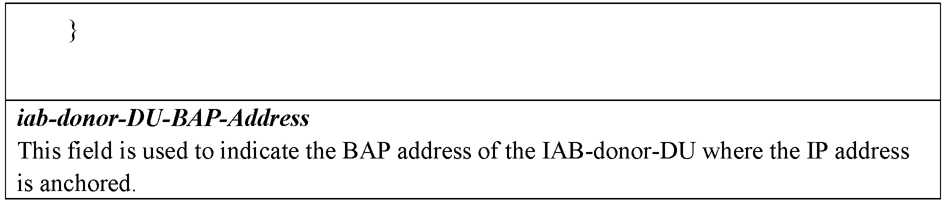

In each embodiment of the present disclosure, high layer signaling may be e.g. radio resource control (RRC) signaling; for example, is called an RRC message, for example includes an MIB, system information, and a dedicated RRC message; or is called an RRC information element (RRC IE). The high layer signaling e.g. may further be F1-C signaling, or is called an F1AP protocol. However, the present disclosure is not limited to this.

In the present disclosure, a multi-hop IAB network deployment scenario is used as an example to illustrate each embodiment, multiple terminal equipments (for example, UEs) are connected to an IAB-donor via a multi-hop IAB-node and finally access a network, the network for example is a 5G network. It should be noted that each embodiment of the present disclosure may not be limited to the above scenario.

In each embodiment of the present disclosure, an IAB topology refers to the unison of all IAB-nodes and IAB-donor-DUs whose F1 interface and/or RRC connections is/are terminated at the same IAB-donor-CU via backhaul links. For example, in FIG. 2 and FIG. 3: Donor-DU1, IAB-node 1, IAB-node 3 and IAB-node 4 are nodes managed by Donor-CU1, and an IAB topology network consisting of them and Donor-CU1 is called a first topology; Donor-DU2, IAB-node 2 and IAB-node 3 are nodes managed by Donor-CU2, and an IAB topology network consisting of them and Donor-CU2 is called a second topology. The boundary node (i.e., IAB-node 3) belongs to both the first topology and the second topology.

### Embodiments of a first aspect

In an IAB-node bootstrap process, migration process or an IAB-MT RRC recovery and IAB-MT RRC reestablishment process, an RRC reconfiguration message will configure a default uplink BAP routing ID (defaultUL-BAP-RoutingID) for F1-C and non-F1 traffic of an IAB-node. The default uplink BAP routing ID may be configured or reconfigured when an IP address corresponding to F1-C related traffic of the IAB-node changes.

However, in the scenarios shown in FIG. 2 and FIG. 3, the boundary node connects to different IAB topologies, and in uplink BAP routing identities used by the boundary nodes, there may be BAP routing identities leading to two IAB topologies (that is, to donor-DUs under two different donor-CUs), respectively. Because BAP routing identities of different IAB topologies are configured and managed by their respective donor-CUs, BAP routing identities belonging to different IAB topologies may conflict. Therefore, the default uplink BAP routing ID is ambiguous, and topology related information needs to be further specified.

To solve the above problem and similar problems, embodiments of a first aspect of the present disclosure provide a method for configuring information. The method is applied to an IAB-node.

FIG. 4 is a schematic diagram of a method for configuring information in the embodiments of a first aspect. As shown in FIG. 4, the method includes:
operation 401, receiving an RRC reconfiguration message, wherein the RRC reconfiguration message indicates relevant information on a topology to which a default uplink BAP routing ID configured for an IAB-node belongs.

In the embodiments of the first aspect, this IAB-node may be a boundary IAB-node, such as IAB-node 3 as shown in FIG. 2 or FIG. 3. In addition, the IAB-node in the present disclosure is not limited to this, and the IAB-node may further be of other types.

In the operation 401, the relevant information on a topology may refer to topology information, and/or cell group (CG) information. The topology includes an F1-terminating topology or a non-F1-terminating topology. The cell group (CG) information includes master cell group/secondary cell group (MCG/SCG) information.

In at least some embodiments, in the operation 401, the RRC reconfiguration message may have a first indication information for indicating a topology to which a default uplink BAP routing ID belongs. For example, the first indication information is used to indicate that the topology to which the default uplink BAP routing ID belongs is an F1-terminating topology or a non-F1-terminating topology. This first indication information may only be required for the boundary IAB-node.

In at least some embodiments, in the operation 401, the topology to which the default uplink BAP routing ID belongs may be indicated by a donor centralized unit (donor-CU) that configures a default uplink BAP routing ID (defaultUL-BAP-RoutingID) field or configures a backhaul adaptation protocol configuration (bap-Config) containing the default uplink BAP routing ID field. In this way, which topology to which the default uplink BAP routing ID belongs can be indicated through an implicit method.

If the default uplink BAP routing ID field or the bap-Config containing the default uplink BAP routing ID field is configured by an F1-terminating donor, the default uplink BAP routing ID belongs to an F1-terminating topology; if the default uplink BAP routing ID field or the bap-Config containing the default uplink BAP routing ID field is configured by a non-F1-terminating donor, the default uplink BAP routing ID belongs to a non-F1-terminating topology.

For example, the RRC specification may be enhanced in TS 38.331. Specifically, the *defaultUL-BAP-RoutingID* field in bap-Config IE of the RRC reconfiguration messge may be modified into the form as shown in Table 3 below.

**Table 3**

| |
|---|
| ***defaultUL-BAP-RoutingID*** |
| This field is used for IAB-node to configure the default uplink Routing ID in the topology managed by the IAB-donor-CU configuring this field, which is used by IAB-node during IAB-node bootstrapping, migration, IAB-MT RRC resume and IAB-MT RRC re-establishment for *F1-C* and *non-F1* traffic. The *defaultUL-BAP-RoutingID* can be (re-)configured when IAB-node IP address for *F1-C* related traffic changes. This field is mandatory only for IAB-node bootstrapping. |

For the solution in which topology to which the default uplink BAP routing ID belongs can be indicated through an implicit method, in a specific implementation, whether the default uplink BAP routing ID field or the bap-Config containing the default uplink BAP routing ID field is configured by an F1-terminating donor or by a non-F1-terminating donor may be determined by whether the MN, or the SN is the F1-terminating donor.

For example, if the IAB-node establishes an NR-DC after establishing F1 connection, the MN is an F1-terminating donor; if the IAB-node establishes the NR-DC before establishing F1-C, the IAB-node selects MN or SN as an F1-terminating donor.

If the default uplink BAP routing ID field or the bap-Config is included in an RRC reconfiguration message transmitted via SRB3, or the default uplink BAP routing ID field or the bap-Config is included in a multi radio access technology dual connected secondary cell group information element (mrdc-SecondaryCellGroup IE), the default uplink BAP routing ID field or the bap-Config is configured by a secondary node (SN). If the default uplink BAP routing ID field or the bap-Config is included in an RRC reconfiguration message transmitted via SRB1, and is not included in mrdc-SecondaryCellGroup IE, the default uplink BAP routing ID field or the bap-Config is configured by a master node (MN).

Through the embodiments of the first aspect, which topology to which a default uplink BAP routing ID configured for an IAB-node belongs can be indicated.

### Embodiments of a second aspect

In an IAB-node bootstrap process, migration process or an IAB-MT RRC recovery and IAB-MT RRC reestablishment process, an RRC reconfiguration message will configure a default uplink BH RLC channel (defaultUL-BH-RLC-Channel) for F1-C and non-F1 traffic of an IAB-node. The default uplink BH RLC channel may be configured or reconfigured when an IP address corresponding to F1-C related traffic of the IAB-node changes and when a new IP address is anchored in different IAB-donor-DUs. Because a BH RLC channel identity is only unique on each link, in the case of dual connection, a link of the BH RLC channel, that is, an uplink parent node link, also equivalent to a cell group, needs to be further indicated. In the case of Rel-16, if an IAB-MT works in an EN-DC scenario, the default uplink BH RLC channel refers to an RLC channel on a secondary cell group (SCG), otherwise, it refers to a radio link control (RLC) channel on a master cell group (MCG).

In an NR-DC scenario of Rel-17, a parent node of the IAB-node may belong to different IAB-donor-CUs, that is, a boundary IAB-node may have two IAB-donor-CUs. Both MN (master node) and SN (secondary node) may serve as an F1-terminating donor node. If the IAB-node establishes an NR-DC before F1-C connection is established, the IAB-node may implicitly conclude that MN or SN is an F1-terminating donor, for example, based on an entity that provides a default BAP configuration. In this situation, Rel-16's specified method is not applicable, because in Rel-17's NR-DC scenario, the default uplink BH RLC channel may further refer to the SCG. That is, if the IAB-MT operates other than in an EN-DC scenario, the default uplink BH RLC channel may refer to an RLC channel on the MCG or the SCG.

When routing is performed at a BAP sublayer, if an F1AP does not configure or reconfigure a backhaul routing configuration after RRC configures or reconfigures defaultUL-BH-RLC-Channel at a latest time, an egress link needs to be selected according to the configured defaultUL-BH-RLC-Channel. Therefore, ambiguity of the default uplink BH RLC channel leads to ambiguity of the selection of the egress link, and topology information or cell group information needs to be further specified.

To solve the above problem and similar problems, embodiments of a second aspect of the present disclosure provide a method for configuring information. The method is applied to an IAB-node.

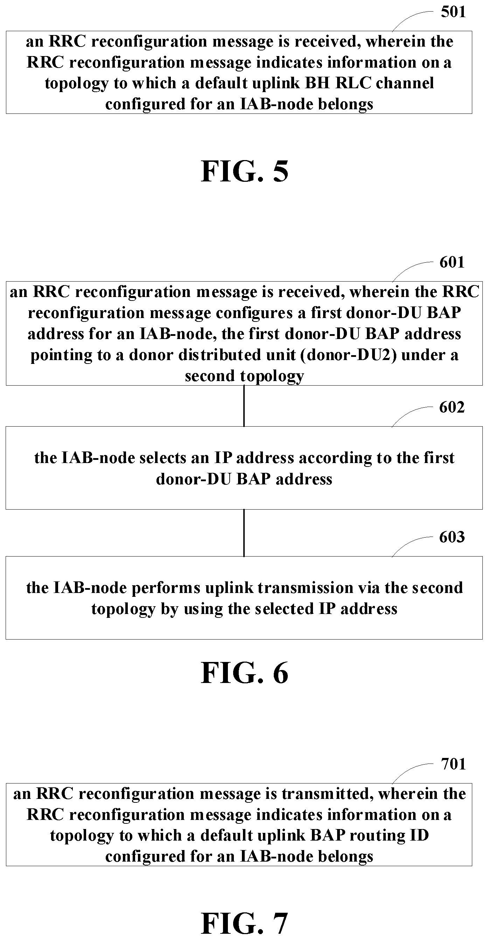

FIG. 5 is a schematic diagram of a method for configuring information in the embodiments of a second aspect. As shown in FIG. 5, the method includes:
operation 501, receiving an RRC reconfiguration message, wherein the RRC reconfiguration message indicates information on a topology to which a default uplink BH RLC channel configured for an IAB-node belongs.

In the embodiments of the second aspect, the IAB-node does not operate in EN-DC. This IAB-node may be a boundary IAB-node, such as IAB-node 3 as shown in FIG. 2 or FIG. 3. In addition, the IAB-node in the present disclosure is not limited to this, and the IAB-node may further be of other types.

In the operation 501, the information on a topology may refer to topology information, and/or cell group information. The topology includes an F1-terminating topology or a non-F1-terminating topology. The cell group information includes master cell group/secondary cell group (MCG/SCG) information.

In some embodiments of the operation 501, the RRC reconfiguration message may have a second indication information for indicating that a topology to which a default uplink BH RLC channel belongs is an F1-terminating topology or a non-F1-terminating topology, or, the second indication information is used to indicate that the default uplink BH RLC channel refers to an RLC channel on a master cell group (MCG) or an RLC channel on a secondary cell group (SCG). This second indication information may be mandatory for a dual-connected node, or an NR-DC node, or a boundary IAB-node.

In at least some other embodiments of the operation 501, the default uplink BH RLC channel (defaultUL-BH-RLC-Channel) field may refer to an RLC channel on an MCG or an RLC channel on an SCG, a cell group to which the default uplink BH RLC channel refers may be indicated by a donor centralized unit (donor-CU) that configures a default uplink BH RLC channel (defaultUL-BH-RLC-Channel) field or configures bap-Config containing the default uplink BH RLC channel field. In this way, information on a topology to which the default uplink BH RLC channel belongs can be indicated through an implicit method.

In at least some other embodiments: if the default uplink BH RLC channel (defaultUL-BH-RLC-Channel) field or the bap-Config containing the default uplink BH RLC channel field is configured by an MN, the default uplink BH RLC channel refers to the RLC channel on the MCG; if the default uplink BH RLC channel (defaultUL-BH-RLC-Channel) field or the bap-Config containing the default uplink BH RLC channel field is configured by an SN, the default uplink BH RLC channel refers to the RLC channel on the SCG. That is to say, for an IAB-node (such as a boundary IAB-node), the default uplink BH RLC channel refers to an RLC channel on a backhaul link configured by a donor-CU that configures this field.

For example, the RRC specification may be enhanced in TS 38.331. Enhancement shown in Table 4 may be performed in defaultUL-BH-RLC-Channel field in bap-Config IE of the RRC reconfiguration message.

**Table 4**

| |
|---|
| ***defaultUL-BH-RLC-Channel*** |
| This field is used for IAB-nodes to configure the default uplink BH RLC channel, which is used by IAB-node during IAB-node bootstrapping, migration, IAB-MT RRC resume and IAB-MT RRC re-establishment *for F1-C and non-F1 traffic.* The *defaultUL-BH-RLC-Channel* can be (re-)configured when IAB-node IP address for *F1-C* related traffic changes, and the new IP address is anchored at a different IAB-donor-DU. This field is mandatory for IAB-node bootstrapping. If the IAB-MT is operating in EN-DC, the default uplink BH RLC channel is referring to an RLC channel on the SCG; Otherwise, it is referring to an RLC channel on either the MCG or the SCG depending on whether MN or SN configures this field |

In the at least some other embodiments: if the default uplink BH RLC channel field or bap-Config is included in an RRC reconfiguration message transmitted via SRB1 and is not included in a multi radio access technology dual connected secondary cell group information element (mrdc-SecondaryCellGroup IE), the default uplink BH RLC channel field or bap-Config is configured by a master node (MN); if the default uplink BH RLC channel field or bap-Config is included in an RRC reconfiguration message transmitted via SRB3, or the default uplink BH RLC channel field or bap-Config is included in mrdc-SecondaryCellGroup IE, the default uplink BH RLC channel field or bap-Config is configured by a secondary node (SN).

When routing is performed at a BAP sublayer, if an F1AP does not configure or reconfigure a backhaul routing configuration after RRC configures or reconfigures a default uplink BH RLC channel at a latest time, an egress link is selected according to a cell group to which the default uplink BH RLC channel corresponds.

In at least one embodiment, when routing is performed at a BAP sublayer, if an F1 application protocol (F1AP) does not configure or reconfigure a backhaul routing configuration after RRC configures or reconfigures a default uplink BH RLC channel at a latest time, the IAB-node selects an egress link according to a cell group to which the default uplink BH RLC channel corresponds.

Through the embodiments of the second aspect, information on a topology to which a default uplink BH RLC channel configured for an IAB-node belongs can be indicated.

### Embodiments of a third aspect

In the case of inter-donor routing as shown in FIG. 2 and FIG. 3, a descendant node of a boundary node may use the same inter-donor (or inter-Cu) topology adaptation procedure. For example, after an IAB-MT of the boundary node is migrated to donor-CU2, or establishes RRC with donor-CU2, an IAB-DU of the boundary node still maintains F1 connection with donor-CU1, and the descendant node (such as IAB-node 4) still maintains RRC connection and F1 connection with donor-CU1.

Since the descendant node of the boundary node needs to migrate a transport path of the F1 connection to a non-F1-terminating topology, donor-CU2 needs to provide the descendant node with new TNL (transport network layer) addresses i.e., IP addresses according to a request of donor-CU1. One or more of these new TNL addresses are anchored to donor-DUs in a topology of donor-CU2, such as donor-DU2. Donor-CU2 transmits these new TNL addresses to donor-CU1 via an XnAP message, such as an IAB Transport Migration Management Response message. Donor-CU2 further provides layer 2 information under its topology to donor-CU1, such as an uplink BAP routing identity, containing a BAP address of a donor-DU such as donor-DU2 in the topology. Donor-CU1 configures an IP address for the descendant node via an RRCReconfiguration message. Configuration of the IP Address uses IAB-IP-AddressConfiguration IE in RRC reconfiguration, which contains the IP Address, a usage of the IP address, and a field such as a BAP address of the donor-DU (iab-donor-DU-BAP-Address) corresponding to the IP address. When the descendant node performs uplink data transmission originating from itself, a BAP address contained in a routing ID is obtained through a BAP routing ID configured for the data traffic. This address is a BAP address of a destination donor-DU. Then, in IAB-IP-AddressConfiguration configuration, an IP address corresponding to the BAP address of the donor-DU is searched, and this IP address is selected as an IP address used by the traffic to perform uplink transmission.

Because the BAP address of donor-DU2 is in the topology of CU2, it may conflict with the BAP address in the topology of CU1.

To solve the above problem, embodiments of the third aspect provide a method for configuring information, the method is applicable to an IAB-node.

FIG. 6 is a schematic diagram of a method for configuring information in the embodiments of a third aspect. As shown in FIG. 6, the method includes:
operation 601, receiving an RRC reconfiguration message, wherein the RRC reconfiguration message configures a first donor-DU BAP address for an IAB-node, the first donor-DU BAP address referring to a donor distributed unit (donor-DU2) under a second topology.

In the embodiments of the third aspect, this IAB-node may be a descendant node of a boundary IAB-node, such as IAB-node 4 as shown in FIG. 2 or FIG. 3. In addition, the IAB-node in the present disclosure is not limited to this, and the IAB-node may further be of other types.

In at least one embodiment, the second topology refers to a topology different from a topology to which the IAB-node belongs. For example, the IAB-node belongs to an F1-terminating topology of the boundary node, that is, a first topology, and the second topology is a non-F1-terminating topology of the boundary node.

In at least one embodiment of the operation 601, IP address configuration of the RRC reconfiguration message may include the first donor-DU BAP address.

In at least one embodiment, the IAB-node is configured with an uplink BAP routing ID which contains the first donor-DU BAP address.

In at least one embodiment, as shown in FIG. 6, the method further includes:
operation 602, the IAB-node selects an IP address according to the first donor-DU BAP address; and
operation 603, the IAB-node performs uplink transmission via the second topology by using the selected IP address.

As may be known with reference to FIGS. 2 and 3, in the embodiments of the third aspect, CU1 may assign a first donor-DU BAP address to donor-DU2 in the topology of CU1, the first donor-DU BAP address may be called a pseudo BAP address or an alias address. CU1 may configure an uplink BAP routing ID for a descendant node, including the first donor-DU BAP address indicating donor-DU2.

Because the descendant node selects an IP address according to a donor-DU BAP address in the uplink BAP routing ID, a BAP address for donor-DU2 in IAB-IP-AddressConfiguration is also the first donor-DU BAP address of donor-DU2, not an actual BAP address of donor-DU2 in the topology of CU2. Specifically, for a descendant node of the boundary IAB-node, the BAP address of IAB-donor-DU in an IP address configuration may be the first donor-DU BAP address, the first donor-DU BAP address refers to an IAB-donor-DU (such as donor-DU2 in FIG. 2 and 3) underneath a non-F1-terminating donor CU of the boundary IAB-node.

For example, the RRC specification may be enhanced in TS 38.331. Enhancement shown in Table 5 may be performed in iab-donor-DU-BAP-Address field in IAB-IP-AddressConfiguration IE of the RRC reconfiguration message.

**Table 5**

| |
|---|
| ***iab-donor-DU-BAP-Address*** |
| This field is used to indicate the BAP address of the IAB-donor-DU where the IP address is anchored. For a boundary IAB node's descendant node, this field may be a pseudo BAP address referring to an IAB-donor-DU underneath the boundary IAB node's non-F1-terminating donor-CU |

In at least one embodiment, in a case of receiving an IAB IP address addition/modification list (iab-IP-AddressToAddModList) contained in an RRC reconfiguration message, the IAB-node saves an IP address in the list and the first donor-DU BAP address to which the IP address corresponds. The IP address may be IPv4, or may be IPv6 address. The IP address may be used for F1-C, F1-U, non-F1 traffic, etc.

According to the embodiments of the third aspect, when configuring an IP address for the boundary IAB-node or a descendant node, a situation in which a BAP address of a donor-DU is a pseudo address may be coped with.

### Embodiments of a fourth aspect

Embodiments of a fourth aspect of the present disclosure provide a method for configuring information, corresponding to the method for configuring information in the embodiments of the first aspect. The method is applied to a donor centralized unit (CU), such as donor-CU1 or donor-CU2 in FIG. 2 or FIG. 3.

FIG. 7 is a schematic diagram of a method for configuring information in the embodiments of a fourth aspect, as shown in FIG. 7, the method includes:
operation 701, transmitting an RRC reconfiguration message, wherein the RRC reconfiguration message indicates information on a topology to which a default uplink BAP routing ID configured for an IAB-node belongs.

In the embodiments of the fourth aspect, this IAB-node may be a boundary IAB-node, such as IAB-node 3 as shown in FIG. 2 or FIG. 3. In addition, the IAB-node in the present disclosure is not limited to this, and the IAB-node may further be of other types.

In the operation 701, the information on a topology may refer to topology information, and/or cell group information. The topology includes an F1-terminating topology or a non-F1-terminating topology. The cell group (CG) information includes master cell group/secondary cell group (MCG/SCG) information.

In at least some embodiments, in the operation 701, the RRC reconfiguration message may have a first indication information for indicating a topology to which a default uplink BAP routing ID belongs. For example, the first indication information is used to indicate that the topology to which the default uplink BAP routing ID belongs is an F1-terminating topology or a non-F1-terminating topology. This first indication information may only be required for the boundary IAB-node.

In at least some embodiments, in the operation 701, the topology to which the default uplink BAP routing ID belongs may be indicated by a donor centralized unit (donor-CU) that configures a default uplink BAP routing ID (defaultUL-BAP-RoutingID) field or configures a backhaul adaptation protocol configuration (bap-Config) containing the default uplink BAP routing ID field. In this way, which topology to which the default uplink BAP routing ID belongs can be indicated through an implicit method.

If the default uplink BAP routing ID field or the bap-Config containing the default uplink BAP routing ID field is configured by an F1-terminating donor, the default uplink BAP routing ID belongs to an F1-terminating topology; if the default uplink BAP routing ID field or the bap-Config containing the default uplink BAP routing ID field is configured by a non-F1-terminating donor, the default uplink BAP routing ID belongs to a non-F1-terminating topology.

Through the embodiments of the fourth aspect, which topology to which a default uplink BAP routing ID configured for an IAB-node belongs can be indicated.

### Embodiments of a fifth aspect

Embodiments of a fifth aspect of the present disclosure provide a method for configuring information, corresponding to the method for configuring information in the embodiments of the second aspect. The method is applied to a donor centralized unit (CU), such as donor-CU1 or donor-CU2 as shown in FIG. 2 or FIG. 3.

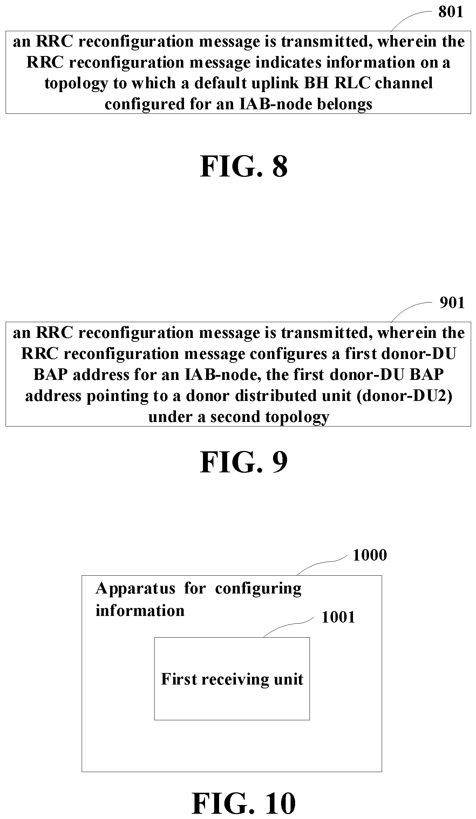

FIG. 8 is a schematic diagram of a method for configuring information in the embodiments of a fifth aspect. As shown in FIG. 8, the method includes:
operation 801, transmitting an RRC reconfiguration message, wherein the RRC reconfiguration message indicates information on a topology to which a default uplink BH RLC channel configured for an IAB-node belongs.

In the embodiments of the fifth aspect, the IAB-node does not operate in EN-DC. This IAB-node may be a boundary IAB-node, such as IAB-node 3 as shown in FIG. 2 or FIG. 3. In addition, the IAB-node in the present disclosure is not limited to this, and the IAB-node may further be of other types.

In the operation 801, the information on a topology may refer to topology information, and/or cell group information. The topology includes an F1-terminating topology or a non-F1-terminating topology. The cell group information includes master cell group/secondary cell group (MCG/SCG) information.

In some embodiments of the operation 801, the RRC reconfiguration message may have a second indication information for indicating that a topology to which a default uplink BH RLC channel belongs is an F1-terminating topology or a non-F1-terminating topology, or, the second indication information is used to indicate that the default uplink BH RLC channel refers to an RLC channel on a master cell group (MCG) or an RLC channel on a secondary cell group (SCG). This second indication information may be for a dual-connected node, or an NR-DC node, or a boundary IAB-node is required.

In at least some other embodiments of the operation 801, the default uplink BH RLC channel (defaultUL-BH-RLC-Channel) field may refer to an RLC channel on an MCG or an RLC channel on an SCG, a cell group to which the default uplink BH RLC channel refers may be indicated by a donor centralized unit (donor-CU) that configures a default uplink BH RLC channel (defaultUL-BH-RLC-Channel) field or configures bap-Config containing the default uplink BH RLC channel field. In this way, information on a topology to which the default uplink BH RLC channel belongs can be indicated through an implicit method.

In at least some other embodiments: if a donor configuring the default uplink BH RLC channel (defaultUL-BH-RLC-Channel) field or the bap-Config containing the default uplink BH RLC channel field is an MN, the default uplink BH RLC channel refers to the RLC channel on the MCG; if a donor configuring the default uplink BH RLC channel (defaultUL-BH-RLC-Channel) field or the bap-Config containing the default uplink BH RLC channel field is an SN, the default uplink BH RLC channel refers to the RLC channel on the SCG. That is to say, for an IAB-node (such as a boundary IAB-node), the default uplink BH RLC channel refers to an RLC channel on a backhaul link configured by a donor-CU that configures this field.

In at least one embodiment, when routing is performed at a BAP sublayer, if an F1 application protocol (F1AP) does not configure or reconfigure a backhaul routing configuration after RRC configures or reconfigures a default uplink BH RLC channel at a latest time, the IAB-node selects an egress link according to a cell group to which the default uplink BH RLC channel corresponds.

Through the embodiments of the fifth aspect, information on a topology to which a default uplink BH RLC channel configured for an IAB-node belongs can be indicated.

### Embodiments of a sixth aspect

Embodiments of a sixth aspect provide a method for configuring information, corresponding to the method for configuring information in the embodiments of the third aspect. The method is applied to a donor centralized unit (CU), such as donor-CU1 as shown in FIG. 2 or FIG. 3.

FIG. 9 is a schematic diagram of a method for configuring information in the embodiments of a sixth aspect. As shown in FIG. 9, the method includes:
operation 901, transmitting an RRC reconfiguration message, wherein the RRC reconfiguration message configures a first donor-DU BAP address for an IAB-node, the first donor-DU BAP address referring to a donor distributed unit (donor-DU2) under a second topology.

In the embodiments of the sixth aspect, this IAB-node may be a descendant node of a boundary IAB-node, such as IAB-node 4 as shown in FIG. 2 or FIG. 3. In addition, the IAB-node in the present disclosure is not limited to this, and the IAB-node may further be of other types.

In at least one embodiment, the second topology refers to a topology different from a topology to which the IAB-node belongs. For example, the IAB-node belongs to an F1-terminating topology of the boundary node, and the second topology is a non-F1-terminating topology of the boundary node.

In at least one embodiment of the operation 901, IP address configuration of the RRC reconfiguration message may include the first donor-DU BAP address.

In at least one embodiment, a CU may configure the IAB-node with an uplink BAP routing ID which contains the first donor-DU BAP address.

As may be known with reference to FIGS. 2 and 3, in the embodiments of the third aspect, donor-CU1 may assign a first donor-DU BAP address to donor-DU2 in the topology of CU1, the first donor-DU BAP address may be called a pseudo BAP address or an alias address. CU1 may configure an uplink BAP routing ID for a descendant node, including the first donor-DU BAP address indicating donor-DU2.

Because the descendant node selects an IP address according to a donor-DU BAP address in the uplink BAP routing ID, a BAP address for donor-DU2 in IAB-IP-AddressConfiguration is also the first donor-DU BAP address of donor-DU2, not an actual BAP address of donor-DU2 in the topology of CU2. Specifically, for a descendant node of the boundary IAB-node, the BAP address of IAB-donor-DU in an IP address configuration may be the first donor-DU BAP address, the first donor-DU BAP address refers to an IAB-donor-DU (such as donor-DU2 in FIG. 2 and 3) under a non-F1-terminating donor CU of the boundary IAB-node.

In at least one embodiment, an RRC reconfiguration message transmitted by a CU may contain an IAB IP address addition/modification list (iab-IP-AddressToAddModList), and the list includes an IP address and the first donor-DU BAP address to which the IP address corresponds. The IP address may be IPv4, or may be IPv6 address. The IP address may be used for F1-C, F1-U, non-F1 traffic, etc.

According to the embodiments of the sixth aspect, when configuring an IP address for the boundary IAB-node or a descendant node, a situation in which a BAP address of a donor-DU is a pseudo address may be coped with.

### Embodiments of a seventh aspect

Embodiments of a seventh aspect of the present disclosure provide an apparatus for configuring information, corresponding to the method for configuring information in the embodiments of the first aspect. The apparatus is applied to an IAB-node.

FIG. 10 is a schematic diagram of an apparatus for configuring information in the embodiments of a seventh aspect. As shown in FIG. 10, the apparatus 1000 for configuring information includes:
a first receiving unit 1001 configured to receive an RRC reconfiguration message, wherein the RRC reconfiguration message indicates information on a topology to which a default uplink BAP routing ID configured for an IAB-node belongs.

In the embodiments of the seventh aspect, this IAB-node may be a boundary IAB-node, such as IAB-node 3 as shown in FIG. 2 or FIG. 3. In addition, the IAB-node in the present disclosure is not limited to this, and the IAB-node may further be of other types.

The information on a topology may refer to topology information, and/or cell group information. The topology includes an F1-terminating topology or a non-F1-terminating topology. The cell group (CG) information includes master cell group/secondary cell group (MCG/SCG) information.

In at least some embodiments, the RRC reconfiguration message may have a first indication information for indicating a topology to which a default uplink BAP routing ID belongs. For example, the first indication information is used to indicate that the topology to which the default uplink BAP routing ID belongs is an F1-terminating topology or a non-F1-terminating topology. This first indication information may only be required for the boundary IAB-node.

In at least some embodiments, the topology to which the default uplink BAP routing ID belongs may be indicated by a donor centralized unit (donor-CU) that configures a default uplink BAP routing ID (defaultUL-BAP-RoutingID) field or configures a backhaul adaptation protocol configuration (bap-Config) containing the default uplink BAP routing ID field. In this way, which topology to which the default uplink BAP routing ID belongs can be indicated through an implicit method.

If the default uplink BAP routing ID field or the bap-Config containing the default uplink BAP routing ID field is configured by an F1-terminating donor, the default uplink BAP routing ID belongs to an F1-terminating topology; if the default uplink BAP routing ID field or the bap-Config containing the default uplink BAP routing ID field is configured by a non-F1-terminating donor, the default uplink BAP routing ID belongs to a non-F1-terminating topology.

For the solution that which topology to which the default uplink BAP routing ID belongs can be indicated through an implicit method, in a specific implementation, the default uplink BAP routing ID field or the bap-Config containing the default uplink BAP routing ID field configured by an F1-terminating donor or by a non-F1-terminating donor may be determined by a MN, or by a SN or by the F1-terminating donor.

For example, if the IAB-node establishes an NR-DC after establishing F1 connection, the MN is an F1-terminating donor; if the IAB-node establishes the NR-DC before establishing F1-C, the IAB-node selects MN or SN as an F1-terminating donor.

If the default uplink BAP routing ID field or the bap-Config is included in an RRC reconfiguration message transmitted via SRB3, or the default uplink BAP routing ID field or the bap-Config is included in a multi radio access technology dual connected secondary cell group information element (mrdc-SecondaryCellGroup IE), the default uplink BAP routing ID field or the bap-Config is configured by a secondary node (SN). If the default uplink BAP routing ID field or the bap-Config is included in an RRC reconfiguration message transmitted via SRB1, and is not included in mrdc-SecondaryCellGroup IE, the default uplink BAP routing ID field or the bap-Config is configured by a master node (MN).

Through the embodiments of the seventh aspect, which topology to which a default uplink BAP routing ID configured for an IAB-node belongs can be indicated.

### Embodiments of an eighth aspect

Embodiments of an eighth aspect of the present disclosure provide an apparatus for configuring information, corresponding to the method for configuring information in the embodiments of the second aspect. The apparatus is applied to an IAB-node.

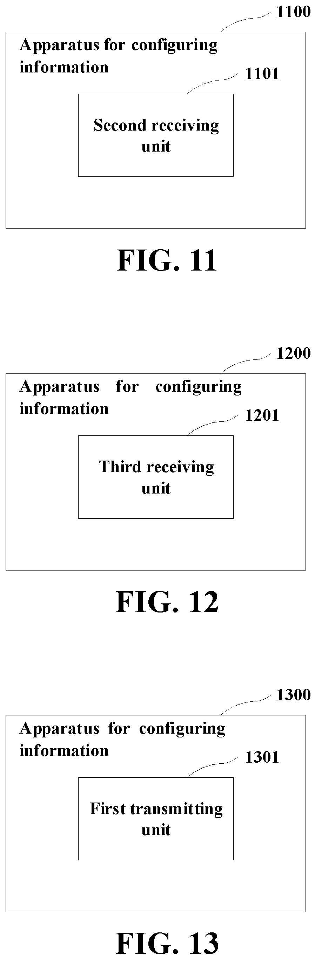

FIG. 11 is a schematic diagram of an apparatus for configuring information in the embodiments of an eighth aspect. As shown in FIG. 11, the apparatus 1100 for configuring information includes:
a second receiving unit 1101 configured to receive an RRC reconfiguration message, wherein the RRC reconfiguration message indicates information on a topology to which a default uplink BH RLC channel configured for an IAB-node belongs.

In the embodiments of the eighth aspect, the IAB-node does not operate in EN-DC. This IAB-node may be a boundary IAB-node, such as IAB-node 3 as shown in FIG. 2 or FIG. 3. In addition, the IAB-node in the present disclosure is not limited to this, and the IAB-node may further be of other types.

The information on a topology may refer to topology information, and/or cell group information. The topology includes an F1-terminating topology or a non-F1-terminating topology. The cell group information includes master cell group/secondary cell group (MCG/SCG) information.

In some embodiments, the RRC reconfiguration message may have a second indication information for indicating that a topology to which a default uplink BH RLC channel belongs is an F1-terminating topology or a non-F1-terminating topology, or, the second indication information is used to indicate that the default uplink BH RLC channel refers to an RLC channel on a master cell group (MCG) or an RLC channel on a secondary cell group (SCG). This second indication information may be for a dual-connected node, or an NR-DC node, or a boundary IAB-node is required.

In at least some other embodiments, the default uplink BH RLC channel (defaultUL-BH-RLC-Channel) field may refer to an RLC channel on an MCG or an RLC channel on an SCG, a cell group to which the default uplink BH RLC channel refers may be indicated by a donor centralized unit (donor-CU) that configures a default uplink BH RLC channel (defaultUL-BH-RLC-Channel) field or configures bap-Config containing the default uplink BH RLC channel field. In this way, information on a topology to which the default uplink BH RLC channel belongs can be indicated through an implicit method.

In at least some other embodiments: if the default uplink BH RLC channel (defaultUL-BH-RLC-Channel) field or the bap-Config containing the default uplink BH RLC channel field is configured by an MN, the default uplink BH RLC channel refers to the RLC channel on the MCG; if the default uplink BH RLC channel (defaultUL-BH-RLC-Channel) field or the bap-Config containing the default uplink BH RLC channel field is configured by an SN, the default uplink BH RLC channel refers to the RLC channel on the SCG. That is to say, for an IAB-node (such as a boundary IAB-node), the default uplink BH RLC channel refers to an RLC channel on a backhaul link configured by a donor-CU that configures this field.

In the at least some other embodiments: if the default uplink BH RLC channel field or bap-Config is included in an RRC reconfiguration message transmitted via SRB1 and is not included in a multi radio access technology dual connected secondary cell group information element (mrdc-SecondaryCellGroup IE), the default uplink BH RLC channel field or bap-Config is configured by a master node (MN); if the default uplink BH RLC channel field or bap-Config is included in an RRC reconfiguration message transmitted via SRB3, or the default uplink BH RLC channel field or bap-Config is included in mrdc-SecondaryCellGroup IE, the default uplink BH RLC channel field or bap-Config is configured by a secondary node (SN).

When routing is performed at a BAP sublayer, if an F1AP does not configure or reconfigure a backhaul routing configuration after RRC configures or reconfigures a default uplink BH RLC channel at a latest time, an egress link is selected according to a cell group to which the default uplink BH RLC channel corresponds.

In at least one embodiment, when routing is performed at a BAP sublayer, if an F1 application protocol (F1AP) does not configure or reconfigure a backhaul routing configuration after RRC configures or reconfigures a default uplink BH RLC channel at a latest time, the IAB-node selects an egress link according to a cell group to which the default uplink BH RLC channel corresponds.

Through the embodiments of the eighth aspect, information on a topology to which a default uplink BH RLC channel configured for an IAB-node belongs can be indicated.

### Embodiments of a ninth aspect

Embodiments of a ninth aspect provide an apparatus for configuring information, corresponding to the method for configuring information in the embodiments of the third aspect. The apparatus is applied to an IAB-node.

FIG. 12 is a schematic diagram of an apparatus for configuring information in the embodiments of a ninth aspect. As shown in FIG. 12, the apparatus for configuring information includes:
a third receiving unit 1201 configured to receive an RRC reconfiguration message, wherein the RRC reconfiguration message configures a first donor-DU BAP address for an IAB-node, the first donor-DU BAP address refering to a donor distributed unit (donor-DU2) under a second topology.

In the embodiments of the ninth aspect, this IAB-node may be a descendant node of a boundary IAB-node, such as IAB-node 4 as shown in FIG. 2 or FIG. 3. In addition, the IAB-node in the present disclosure is not limited to this, and the IAB-node may further be of other types.

In at least one embodiment, the second topology refers to a topology different from a topology to which the IAB-node belongs. For example, the IAB-node belongs to an F1-terminating topology of the boundary node, and the second topology is a non-F1-terminating topology of the boundary node.

In at least one embodiment, IP address configuration of the RRC reconfiguration message may include the first donor-DU BAP address.

In at least one embodiment, the IAB-node is configured with an uplink BAP routing ID which contains the first donor-DU BAP address.

In at least one embodiment, the third receiving unit 1201 further performs the following operations:
selecting an IP address according to the first donor-DU BAP address; and
performing uplink transmission via the second topology by using the selected IP address.

As may be known with reference to FIGS. 2 and 3, in the embodiments of the ninth aspect, CU1 may assign a first donor-DU BAP address to donor-DU2 in the topology of CU1, the first donor-DU BAP address may be called a pseudo BAP address or an alias address. CU1 may configure an uplink BAP routing ID for a descendant node, including the first donor-DU BAP address indicating donor-DU2.

Because the descendant node selects an IP address according to a donor-DU BAP address in the uplink BAP routing ID, a BAP address for donor-DU2 in IAB-IP-AddressConfiguration is also the first donor-DU BAP address of donor-DU2, not an actual BAP address of donor-DU2 in the topology of CU2. Specifically, for a descendant node of the boundary IAB-node, the BAP address of IAB-donor-DU in an IP address configuration may be the first donor-DU BAP address, the first donor-DU BAP address refers to an IAB-donor-DU (such as donor-DU2 in FIG. 2 and 3) under a non-F1-terminating donor CU of the boundary IAB-node.

In at least one embodiment, in a case of receiving an IAB IP address addition/modification list (iab-IP-AddressToAddModList) contained in an RRC reconfiguration message, the IAB-node saves an IP address in the list and the first donor-DU BAP address to which the IP address corresponds. The IP address may be IPv4, or may be IPv6 address. The IP address may be used for F1-C, F1-U, non-F1 traffic, etc.

According to the embodiments of the ninth aspect, when configuring an IP address for the boundary IAB-node or a descendant node, a situation in which a BAP address of a donor-DU is a pseudo address may be coped with.

### Embodiments of a tenth aspect

Embodiments of a tenth aspect of the present disclosure provide a method for configuring information, corresponding to the method for configuring information in the embodiments of the fourth aspect. The method is applied to a donor centralized unit (CU), such as donor-CU1 or donor-CU2 in FIG. 2 or FIG. 3.

FIG. 13 is a schematic diagram of an apparatus for configuring information in the embodiments of a tenth aspect. As shown in FIG. 13, the apparatus 1300 includes:
a first transmitting unit 1301 configured to transmit an RRC reconfiguration message, wherein the RRC reconfiguration message indicates information on a topology to which a default uplink BAP routing ID configured for an IAB-node belongs.

In the embodiments of the tenth aspect, this IAB-node may be a boundary IAB-node, such as IAB-node 3 as shown in FIG. 2 or FIG. 3. In addition, the IAB-node in the present disclosure is not limited to this, and the IAB-node may further be of other types.

The information on a topology may refer to topology information, and/or cell group information. The topology includes an F1-terminating topology or a non-F1-terminating topology. The cell group (CG) information includes master cell group/secondary cell group (MCG/SCG) information.

In at least some embodiments, the RRC reconfiguration message may have a first indication information for indicating a topology to which a default uplink BAP routing ID belongs. For example, the first indication information is used to indicate that the topology to which the default uplink BAP routing ID belongs is an F1-terminating topology or a non-F1-terminating topology. This first indication information may only be required for the boundary IAB-node.

In at least some embodiments, the topology to which the default uplink BAP routing ID belongs may be indicated by a donor centralized unit (donor-CU) that configures a default uplink BAP routing ID (defaultUL-BAP-RoutingID) field or configures a backhaul adaptation protocol configuration (bap-Config) containing the default uplink BAP routing ID field. In this way, which topology to which the default uplink BAP routing ID belongs can be indicated through an implicit method.

If the default uplink BAP routing ID field or the bap-Config containing the default uplink BAP routing ID field is configured by an F1-terminating donor, the default uplink BAP routing ID belongs to an F1-terminating topology; if the default uplink BAP routing ID field or the bap-Config containing the default uplink BAP routing ID field is configured by a non-F1-terminating donor, the default uplink BAP routing ID belongs to a non-F1-terminating topology.

Through the embodiments of the tenth aspect, which topology to which a default uplink BAP routing ID configured for an IAB-node belongs can be indicated.

### Embodiments of an eleventh aspect

Embodiments of an eleventh aspect of the present disclosure provide an apparatus for configuring information, corresponding to the method for configuring information in the embodiments of the fifth aspect. The method is applied to a donor centralized unit (CU), such as donor-CU1 or donor-CU2 as shown in FIG. 2 or FIG. 3.

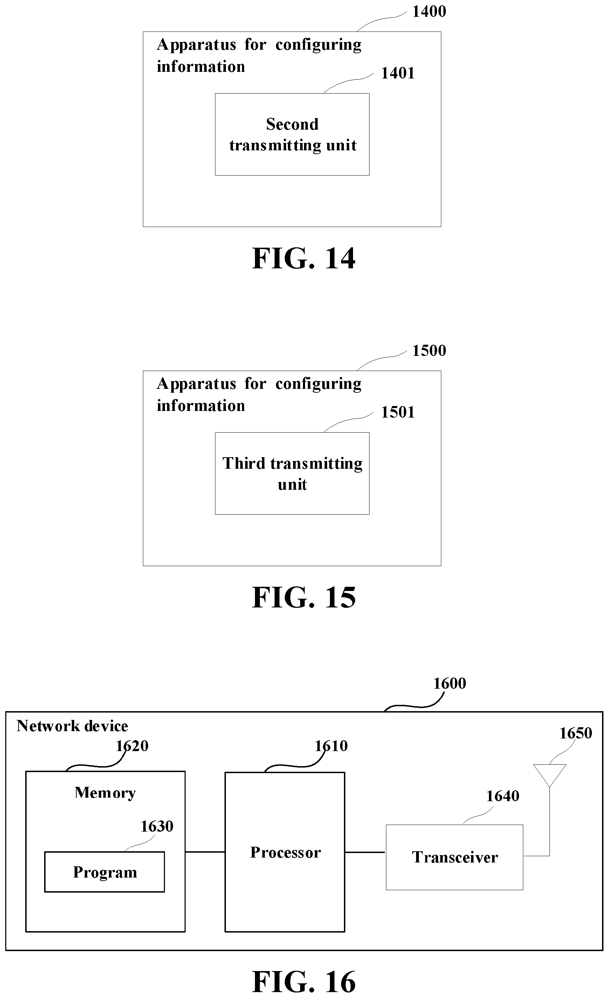

FIG. 14 is a schematic diagram of an apparatus for configuring information in the embodiments of an eleventh aspect. As shown in FIG. 14, the apparatus 1400 includes:
a second transmitting unit 1401 configured to transmit an RRC reconfiguration message, wherein the RRC reconfiguration message indicates information on a topology to which a default uplink BH RLC channel configured for an IAB-node belongs.

In the embodiments of the eleventh aspect, the IAB-node does not operate in EN-DC. This IAB-node may be a boundary IAB-node, such as IAB-node 3 as shown in FIG. 2 or FIG. 3. In addition, the IAB-node in the present disclosure is not limited to this, and the IAB-node may further be of other types.

The information on a topology may refer to topology information, and/or cell group information. The topology includes an F1-terminating topology or a non-F1-terminating topology. The cell group information includes master cell group/secondary cell group (MCG/SCG) information.

In some embodiments, the RRC reconfiguration message may have a second indication information for indicating that a topology to which a default uplink BH RLC channel belongs is an F1-terminating topology or a non-F1-terminating topology, or, the second indication information is used to indicate that the default uplink BH RLC channel refers to an RLC channel on a master cell group (MCG) or an RLC channel on a secondary cell group (SCG). This second indication information may be for a dual-connected node, or an NR-DC node, or a boundary IAB-node is required.

In at least some other embodiments, the default uplink BH RLC channel (defaultUL-BH-RLC-Channel) field may refer to an RLC channel on an MCG or an RLC channel on an SCG, a cell group to which the default uplink BH RLC channel refers may be indicated by a donor centralized unit (donor-CU) that configures a default uplink BH RLC channel (defaultUL-BH-RLC-Channel) field or configures bap-Config containing the default uplink BH RLC channel field. In this way, information on a topology to which the default uplink BH RLC channel belongs can be indicated through an implicit method.

In at least some other embodiments: if a donor configuring the default uplink BH RLC channel (defaultUL-BH-RLC-Channel) field or the bap-Config containing the default uplink BH RLC channel field is an MN, the default uplink BH RLC channel refers to the RLC channel on the MCG; if a donor configuring the default uplink BH RLC channel (defaultUL-BH-RLC-Channel) field or the bap-Config containing the default uplink BH RLC channel field is an SN, the default uplink BH RLC channel refers to the RLC channel on the SCG. That is to say, for an IAB-node (such as a boundary IAB-node), the default uplink BH RLC channel refers to an RLC channel on a backhaul link configured by a donor-CU that configures this field.

In at least one embodiment, when routing is performed at a BAP sublayer, if an F1 application protocol (F1AP) does not configure or reconfigure a backhaul routing configuration after RRC configures or reconfigures a default uplink BH RLC channel at a latest time, the IAB-node selects an egress link according to a cell group to which the default uplink BH RLC channel corresponds.

Through the embodiments of the eleventh aspect, information on a topology to which a default uplink BH RLC channel configured for an IAB-node belongs can be indicated.

### Embodiments of a twelfth aspect

Embodiments of a twelfth aspect provide an apparatus for configuring information, corresponding to the method for configuring information in the embodiments of the sixth aspect. The apparatus is applied to a donor centralized unit (CU), such as donor-CU1 as shown in FIG. 2 or FIG. 3.

FIG. 15 is a schematic diagram of a method for configuring information in the embodiments of a twelfth aspect. As shown in FIG. 15, the apparatus 1500 includes:
a third transmitting unit 1501 configured to transmit an RRC reconfiguration message, wherein the RRC reconfiguration message configures a first donor-DU BAP address for an IAB-node, the first donor-DU BAP address referring to a donor distributed unit (donor-DU2) under a second topology.

In the embodiments of the twelfth aspect, this IAB-node may be a descendant node of a boundary IAB-node, such as IAB-node 4 as shown in FIG. 2 or FIG. 3. In addition, the IAB-node in the present disclosure is not limited to this, and the IAB-node may further be of other types.

In at least one embodiment, the second topology refers to a topology different from a topology to which the IAB-node belongs. For example, the IAB-node belongs to an F1-terminating topology of the boundary node, and the second topology is a non-F1-terminating topology of the boundary node.

In at least one embodiment, IP address configuration of the RRC reconfiguration message may include the first donor-DU BAP address.

In at least one embodiment, a CU may configure the IAB-node with an uplink BAP routing ID which contains the first donor-DU BAP address.

As may be known with reference to FIGS. 2 and 3, in the embodiments of the twelfth aspect, donor-CU1 may assign a first donor-DU BAP address to donor-DU2 in the topology of CU1, the first donor-DU BAP address may be called a pseudo BAP address or an alias address. CU1 may configure an uplink BAP routing ID for a descendant node, including the first donor-DU BAP address indicating donor-DU2.

Because the descendant node selects an IP address according to a donor-DU BAP address in the uplink BAP routing ID, a BAP address for donor-DU2 in IAB-IP-AddressConfiguration is also the first donor-DU BAP address of donor-DU2, not an actual BAP address of donor-DU2 in the topology of CU2. Specifically, for a descendant node of the boundary IAB-node, the BAP address of IAB-donor-DU in an IP address configuration may be the first donor-DU BAP address, the first donor-DU BAP address refers to an IAB-donor-DU (such as donor-DU2 in FIG. 2 and 3) under a non-F1-terminating donor CU of the boundary IAB-node.

In at least one embodiment, an RRC reconfiguration message transmitted by a CU may contain an IAB IP address addition/modification list (iab-IP-AddressToAddModList), and the list includes an IP address and the first donor-DU BAP address to which the IP address corresponds. The IP address may be IPv4, or may be IPv6 address. The IP address may be used for F1-C, F1-U, non-F1 traffic, etc.

According to the embodiments of the twelfth aspect, when configuring an IP address for the boundary IAB-node or a descendant node, a situation in which a BAP address of a donor-DU is a pseudo address may be coped with.

### Embodiments of a thirteenth aspect

Embodiments of the present disclosure further provide a communication system, which may include an IAB-node and a base station CU. At least one of a MT of the IAB-node, a DU of the IAB-node, and the base station CU may have the composition of the electronic device shown in FIG. 16.

FIG. 16 is a schematic diagram of composition of an electronic device in the embodiments of the present disclosure. As shown in FIG. 16, the electronic device 1600 may include: a processor 1610 (such as a central processing unit (CPU)) and a memory 1620; the memory 1620 is coupled to the processor 1610. The memory 1620 may store various data; moreover, further stores a program 1630 for information processing, and executes the program 1630 under the control of the processor 1610.

For example, the processor 1610 may be configured to execute a program to implement the method in the embodiments of the first to sixth aspects.

In addition, as shown in FIG. 16, the electronic device 1600 may further include: a transceiver 1640 and an antenna 1650, etc.; wherein the functions of said components are similar to relevant arts, which are not repeated here. It's worth noting that the electronic device 1600 does not have to include all the components shown in FIG. 16. Moreover, the electronic device 1600 may also include components not shown in FIG. 16, related arts may be referred to.

The embodiments of the present disclosure further provide a computer program, wherein when the program is executed in an IAB-node, the program enables the IAB-node to execute the method as described in the embodiments of the first to third aspects.

The embodiments of the present disclosure further provide a computer program, wherein when the program is executed in a CU node, the program enables the CU node to execute the method as described in the embodiments of the fourth to sixth aspects.

The embodiments of the present disclosure further provide a storage medium in which a computer program is stored, wherein the computer program enables a electronic device to execute the method described in the embodiments of the first to sixth aspects.

The apparatus and method in the present disclosure may be realized by hardware, or may be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/apparatus described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:
**(A method of an IAB-node side:)**
   1. A method for configuring information, applicable to an IAB-node, the method including:
      receiving an RRC reconfiguration message, wherein, the RRC reconfiguration message indicates information on a topology to which a default uplink BAP routing ID configured for the IAB-node belongs.
   2. The method according to Supplement 1, wherein,
      the topology includes an F1-terminating topology or a non-F1-terminating topology.
   3. The method according to Supplement 1, wherein,
      the RRC reconfiguration message has a first indication information for indicating a topology to which the default uplink BAP routing ID belongs.
   4. The method according to Supplement 1, wherein,
      the topology to which the default uplink BAP routing ID belongs is indicated by a donor centralized unit (donor-CU) that configures a default uplink BAP routing ID (defaultUL-BAP-RoutingID) field or configures bap-Config containing the default uplink BAP routing ID field.
   5. The method according to Supplement 4, wherein,
      if the default uplink BAP routing ID field or the bap-Config containing the default uplink BAP routing ID field is configured by an F1-terminating donor, the default uplink BAP routing ID belongs to an F1-terminating topology.
   6. The method according to Supplement 4, wherein,
      if the default uplink BAP routing ID field or the bap-Config containing the default uplink BAP routing ID field is configured by a non-F1-terminating donor, the default uplink BAP routing ID belongs to a non-F1-terminating topology.
   7. The method according to Supplement 5 or 6, wherein,
      whether the default uplink BAP routing ID field or the bap-Config containing the default uplink BAP routing ID field is configured by an F1-terminating donor or by a non-F1-terminating donor is determined by whether the MN, or the SN is the F1-terminating donor.
   8. The method according to Supplement 7, wherein,
      if the IAB-node establishes an NR-DC after establishing F1 connection, the MN is an F1-terminating donor; if the IAB-node establishes the NR-DC before establishing F1-C, the IAB-node selects MN or SN as an F1-terminating donor.
   9. The method according to Supplement 7, wherein,
      if the default uplink BAP routing ID field or the bap-Config is included in an RRC reconfiguration message transmitted via SRB3, or the default uplink BAP routing ID field or the bap-Config is included in mrdc-SecondaryCellGroup IE, the default uplink BAP routing ID field or the bap-Config is configured by a secondary node (SN).
   10. The method according to Supplement 7, wherein,
      if the default uplink BAP routing ID field or the bap-Config is included in an RRC reconfiguration message transmitted via SRB1, and is not included in mrdc-SecondaryCellGroup IE, the default uplink BAP routing ID field or the bap-Config is configured by a master node (MN).
   11. The method according to Supplement 1, wherein,
      the IAB-node is a boundary IAB-node.
   12. A method for configuring information, applicable to an IAB-node, the method including:
      receiving an RRC reconfiguration message, wherein the RRC reconfiguration message indicates information on a topology to which a default uplink BH RLC channel configured for the IAB-node belongs.
   13. The method according to Supplement 12, wherein,
      the RRC reconfiguration message has a second indication information,
      the second indication information is used for indicating that a topology to which a default uplink BH RLC channel belongs is an F1-terminating topology or a non-F1-terminating topology, or, the second indication information is used to indicate that the default uplink BH RLC channel refers to an RLC channel on a master cell group or an RLC channel on a secondary cell group.
   14. The method according to Supplement 12, wherein,
      the configured default uplink BH RLC channel (defaultUL-BH-RLC-Channel) field refers to an RLC channel on an MCG or an RLC channel on an SCG.
   15. The method according to Supplement 14, wherein,
      a cell group to which the default uplink BH RLC channel refers is indicated by a donor centralized unit (donor-CU) that configures a default uplink BH RLC channel (defaultUL-BH-RLC-Channel) field or configures bap-Config containing the default uplink BH RLC channel field.
   16. The method according to Supplement 15, wherein,
      if the default uplink BH RLC channel (defaultUL-BH-RLC-Channel) field or the bap-Config containing the default uplink BH RLC channel field is configured by an MN, the default uplink BH RLC channel refers to the RLC channel on the MCG.
   17. The method according to Supplement 15, wherein,
      if the default uplink BH RLC channel (defaultUL-BH-RLC-Channel) field or the bap-Config containing the default uplink BH RLC channel field is configured by an SN, the default uplink BH RLC channel refers to the RLC channel on the SCG.
   18. The method according to Supplement 17, wherein,
      if the default uplink BH RLC channel field or the bap-Config is included in an RRC reconfiguration message transmitted via SRB3, or the default uplink BH RLC channel field or the bap-Config is included in mrdc-SecondaryCellGroup IE, the default uplink BH RLC channel field or the bap-Config is configured by a secondary node (SN).
   19. The method according to Supplement 16, wherein,
      if the default uplink BH RLC channel field or the bap-Config is included in an RRC reconfiguration message transmitted via SRB1, and is not included in mrdc-SecondaryCellGroup IE, the default uplink BH RLC channel field or the bap-Config is configured by a master node (MN).
   20. The method according to any one of Supplements 12 to 19, wherein
      the IAB-node does not operate in EN-DC.
   21. The method according to Supplement 12, wherein,
      when routing is performed at a BAP sublayer, if an F1AP does not configure or reconfigure a backhaul routing configuration after RRC configures or reconfigures a default uplink BH RLC channel at a latest time, an egress link is selected according to a cell group to which the default uplink BH RLC channel corresponds.
   22. The method according to Supplement 12, wherein,
      the IAB-node is a boundary IAB-node.
   23. A method for configuring information, applicable to an IAB-node, the method including:
      receiving an RRC reconfiguration message, wherein the RRC reconfiguration message configures a first donor-DU BAP address for the IAB-node, the first donor-DU BAP address referring to a donor distributed unit (DU2) under a second topology.
   24. The method according to Supplement 23, wherein,
      IP address configuration of the RRC reconfiguration message includes the first donor-DU BAP address.
   25. The method according to Supplement 23, wherein,
      in a case of receiving an IAB IP address addition/modification list (iab-IP-AddressToAddModList) contained in the RRC reconfiguration message, the IAB-node saves an IP address in the list and the first donor-DU BAP address to which the IP address corresponds.
   26. The method according to Supplement 23, wherein,
      the IAB-node is configured with an uplink BAP routing ID which contains the first donor-DU BAP address.
   27. The method according to Supplement 24, wherein the method further includes:
      the IAB-node selects an IP address according to the first donor-DU BAP address; and
      performs uplink transmission via the second topology by using the selected IP address.
   28. The method according to Supplement 23, wherein,
      the IAB-node is a descendant node of the boundary IAB-node.
   29. The method according to Supplement 28, wherein,
      the second topology is a non-F1-terminating topology of the boundary IAB-node.
**(A method of a CU side:)**
   30. A method for configuring information, applicable to a donor centralized unit (CU), the method including:
      transmitting an RRC reconfiguration message, wherein, the RRC reconfiguration message indicates information on a topology to which a default uplink BAP routing ID configured for an IAB-node belongs.
   31. The method according to Supplement 30, wherein,
      the topology includes an F1-terminating topology or a non-F1-terminating topology.
   32. The method according to Supplement 30, wherein,
      the RRC reconfiguration message has a first indication information for indicating a topology to which the default uplink BAP routing ID belongs.
   33. The method according to Supplement 30, wherein,
      the topology to which the default uplink BAP routing ID belongs is indicated by a donor centralized unit (donor-CU) that configures a default uplink BAP routing ID (defaultUL-BAP-RoutingID) field or configures bap-Config containing the default uplink BAP routing ID field.
   34. The method according to Supplement 33, wherein,
      if the default uplink BAP routing ID field or the bap-Config containing the default uplink BAP routing ID field is configured by the CU as an F1-terminating donor, the default uplink BAP routing ID belongs to an F1-terminating topology.
   35. The method according to Supplement 33, wherein,
      if the default uplink BAP routing ID field or the bap-Config containing the default uplink BAP routing ID field is configured by the CU as a non-F1-terminating donor, the default uplink BAP routing ID belongs to a non-F1-terminating topology.
   36. The method according to Supplement 30, wherein,
      the IAB-node is a boundary IAB-node.
   37. A method for configuring information, applicable to a donor centralized unit (CU), the method including:
      transmitting an RRC reconfiguration message, wherein the RRC reconfiguration message indicates information on a topology to which a default uplink BH RLC channel configured for an IAB-node belongs.
   38. The method according to Supplement 37, wherein,
      the RRC reconfiguration message has a second indication information,
      the second indication information is used for indicating that a topology to which a default uplink BH RLC channel belongs is an F1-terminating topology or a non-F1-terminating topology, or, the second indication information is used to indicate that the default uplink BH RLC channel refers to an RLC channel on a master cell group or an RLC channel on a secondary cell group.
   39. The method according to Supplement 37, wherein,
      the configured default uplink BH RLC channel (defaultUL-BH-RLC-Channel) field refers to an RLC channel on an MCG or an RLC channel on an SCG.
   40. The method according to Supplement 39, wherein,
      a cell group to which the default uplink BH RLC channel refers is indicated by a donor centralized unit (donor-CU) that configures a default uplink BH RLC channel (defaultUL-BH-RLC-Channel) field or configures bap-Config containing the default uplink BH RLC channel field.
   41. The method according to Supplement 40, wherein,
      if the default uplink BH RLC channel (defaultUL-BH-RLC-Channel) field or the bap-Config containing the default uplink BH RLC channel field is configured by the CU as an MN, the default uplink BH RLC channel refers to the RLC channel on the MCG.
   42. The method according to Supplement 40, wherein,
      if the default uplink BH RLC channel (defaultUL-BH-RLC-Channel) field or the bap-Config containing the default uplink BH RLC channel field is configured by the CU as an SN, the default uplink BH RLC channel refers to the RLC channel on the SCG.
   43. The method according to any one of Supplements 37 to 42, wherein,
      the IAB-node does not operate in EN-DC.
   44. The method according to Supplement 37, wherein,
      when routing is performed at a BAP sublayer of the IAB-node, if an F1AP does not configure or reconfigure a backhaul routing configuration after the RRC configures or reconfigures a default uplink BH RLC channel at a latest time, an egress link is selected according to a cell group to which the default uplink BH RLC channel corresponds.
   45. The method according to Supplement 37, wherein,
      the IAB-node is a boundary IAB-node.
   46. A method for configuring information, applicable to a donor centralized unit (CU), the method including:
      transmitting an RRC reconfiguration message, wherein the RRC reconfiguration message configures a first donor-DU BAP address for an IAB-node, the first donor-DU BAP address referring to a donor distributed unit (DU2) under a second topology.
   47. The method according to Supplement 46, wherein,
      IP address configuration of the RRC reconfiguration message includes the first donor-DU BAP address.
   48. The method according to Supplement 46, wherein the method further includes:
      the CU transmits an IAB IP address addition/modification list (iab-IP-AddressToAddModList), the list including an IP address and the first donor-DU BAP address to which the IP address corresponds.
   49. The method according to Supplement 46, wherein the method further includes:
      the CU configures the IAB-node with an uplink BAP routing ID which contains the first donor-DU BAP address.
   50. The method according to Supplement 46, wherein,
      the IAB-node is a descendant node of the boundary IAB-node.
   51. The method according to Supplement 50, wherein,
      the second topology is a non-F1-terminating topology of the boundary IAB-node.

## Claims

1. An apparatus for configuring information, applicable to an IAB-node, the apparatus comprising:
a first receiving unit configured to receive an RRC reconfiguration message, wherein the RRC reconfiguration message indicates information on a topology to which a default uplink BAP routing ID configured for the IAB-node belongs.

2. The apparatus according to claim 1, wherein,
the topology comprises an F1-terminating topology or a non-F1-terminating topology.

3. The apparatus according to claim 1, wherein,
the topology to which the default uplink BAP routing ID belongs is indicated by a donor centralized unit (donor-CU) that configures a default uplink BAP routing ID (defaultUL-BAP-RoutingID) field or configures bap-Config containing a default uplink BAP routing ID field.

4. The apparatus according to claim 3, wherein,
if the default uplink BAP routing ID field or the bap-Config containing the default uplink BAP routing ID field is configured by an F1-terminating donor, the default uplink BAP routing ID belongs to an F1-terminating topology.

5. The apparatus according to claim 3, wherein,
if the default uplink BAP routing ID field or the bap-Config containing the default uplink BAP routing ID field is configured by a non-F1-terminating donor, the default uplink BAP routing ID belongs to a non-F1-terminating topology.

6. The apparatus according to claim 1, wherein,
the IAB-node is a boundary IAB-node.

7. An apparatus for configuring information, applicable to an IAB-node, the apparatus comprising:
a second receiving unit configured to receive an RRC reconfiguration message, wherein the RRC reconfiguration message indicates information on a topology to which a default uplink BH RLC channel configured for the IAB-node belongs.

8. The apparatus according to claim 7, wherein,
a configured default uplink BH RLC channel (defaultUL-BH-RLC-Channel) field refers to an RLC channel on an MCG or an RLC channel on an SCG.

9. The apparatus according to claim 8, wherein,
a cell group to which the default uplink BH RLC channel refers is indicated by a donor centralized unit (donor-CU) that configures a default uplink BH RLC channel (defaultUL-BH-RLC-Channel) field or configures bap-Config containing the default uplink BH RLC channel field.

10. The apparatus according to claim 9, wherein,
if the default uplink BH RLC channel (defaultUL-BH-RLC-Channel) field or the bap-Config containing the default uplink BH RLC channel field is configured by an MN, the default uplink BH RLC channel refers to the RLC channel on the MCG.

11. The apparatus according to claim 9, wherein,
if the default uplink BH RLC channel (defaultUL-BH-RLC-Channel) field or the bap-Config containing the default uplink BH RLC channel field is configured by an SN, the default uplink BH RLC channel refers to the RLC channel on the SCG.

12. The apparatus according to claim 7, wherein,
the IAB-node does not operate at EN-DC.

13. The apparatus according to claim 7, wherein,
when routing is performed at a BAP sublayer, if a backhaul routing configuration is not configured or reconfigured by an F1AP after the default uplink BH RLC channel is configured or reconfigured by an RRC at a latest time, an egress link is selected according to a cell group to which the default uplink BH RLC channel corresponds.

14. The apparatus according to claim 7, wherein,
the IAB-node is a boundary IAB-node.

15. An apparatus for configuring information, applicable to an IAB-node, the apparatus comprising:
a third receiving unit configured to receive an RRC reconfiguration message, wherein the RRC reconfiguration message configures a first donor-DU BAP address for the IAB-node, the first donor-DU BAP address referring to a donor distributed unit (DU2) under a second topology.

16. The apparatus according to claim 15, wherein,
IP address configuration of the RRC reconfiguration message includes the first donor-DU BAP address.

17. The apparatus according to claim 15, wherein,
in a case of receiving an IAB IP address addition/modification list (iab-IP-AddressToAddModList) contained in the RRC reconfiguration message, the IAB-node saves an IP address in the IAB IP address addition/modification list and the first donor-DU BAP address to which the IP address corresponds.

18. The apparatus according to claim 16, wherein, the third receiving unit is further configured to:
select an IP address according to the first donor-DU BAP address; and
perform uplink transmission via the second topology by using the selected IP address.

19. The apparatus according to claim 15, wherein,
the IAB-node is a descendant node of a boundary IAB-node.

20. The apparatus according to claim 19, wherein,
the second topology is a non-F1-terminating topology of the boundary IAB-node.
